# FASCICULE DE BREVET EUROPEEN

(11) **EP 1 629 711 B1**
(45) Date de publication et mention de la délivrance du brevet: **16.01.2008**
(21) Numéro de dépôt: 04447191.0
(22) Date de dépôt: 24.08.2004
(51) Int. Cl.: A01K 13/00

(54) **Guêtre de protection pour animaux**
Gamasche für Tiere
Gaiter for animals

(43) Date de publication de la demande: 01.03.2006
(73) Titulaire: Polymar SPRL, 1400 Nivelles (BE)
(72) Inventeur: Guily, Jacques, 6238 Pont-à-Celles (BE); Guily, Emmannuel, 6238 Pont-à-Celles (BE)
(74) Mandataire: Van Malderen, Joëlle

(56) Documents cités:
- DE-U- 29 513 298
- US-A- 1 899 471
- US-A- 3 405 506

## Description

### Objet de l'invention

La présente invention concerne le domaine des équipements pour animaux, et plus particulièrement pour chevaux et poneys.

Plus précisément, la présente invention se rapporte à une guêtre de protection qui peut être disposée de manière amovible autour de la jambe d'un cheval ou d'un poney, voir p. ex. le document DE-U-29513298.

Une application particulièrement intéressante de cette invention est le domaine de l'équitation.

### Etat de la technique

Un certain nombre de guêtres ont été proposées pour protéger les jambes des chevaux et poneys vis-à-vis des chocs externes occasionnés par exemple par l'impact de la jambe du cheval sur un obstacle tel qu'une haie d'obstacle ou une branche d'arbre. Classiquement, ces guêtres comprennent une coque rigide plus ou moins longue qui s'applique sur l'arrière de la jambe du cheval de façon à protéger ses tendons, la guêtre se fermant en général sur le devant de la jambe du cheval grâce à un système de fixation tel que par exemple des bandes de Velcro@. Un avantage de ces guêtres est qu'elles protègent également la jambe du cheval vis-à-vis des « atteintes » causées par le frottement frontal de ses jambes entre-elles, notamment lorsque le cheval est au galop.

Néanmoins, ces guêtres présentent certains inconvénients parmi lesquels on peut citer:
- la faible, voire non-protection de la partie avant de la jambe du cheval, vis-à-vis des chocs externes, ce qui rend donc le cheval vulnérable à ce niveau,
- la présence de « points fixes » susceptibles d'occasionner des blessures au cheval suite aux frottements répétitifs.

Des guêtres en élastomère souple tel que du néoprène, du caoutchouc naturel... se présentant sous la forme de chaussettes qui se ferment généralement avec des bandes de Velcro®, ont également été proposées sur le marché. Certaines de ces guêtres ont l'avantage de protéger la jambe du cheval sur toute sa surface, mais elles présentent néanmoins l'inconvénient d'absorber l'eau, ce qui se traduit par une accumulation d'eau au niveau de la jambe du cheval lorsque la guêtre est mouillée. Cette accumulation d'eau, déjà source d'inconfort pour le cheval, augmente le risque de tendinite et de risque de perte de la guêtre en cours d'exercice. Cette eau peut avoir plusieurs origines : la transpiration du cheval, les intempéries (pluies, flaques d'eau), ... qui sont autant de limites à l'utilisation de ces guêtres. En outre, elles sont généralement constituées d'un matériau élastique tel que dans certaines conditions d'utilisation elles finissent par serrer si fort la jambe du cheval qu'elles bloquent la circulation sanguine (« effet garot »). En outre, elles sont généralement difficiles à positionner et à entretenir.

Il a également été proposé des guêtres pour chevaux destinés à les protéger vis-à-vis des morsures d'insectes. C'est le cas par exemple des guêtres décrites dans le brevet US-A-5,676,094 et le brevet US-A-6,151,873. Ces guêtres comprennent un panneau flexible en mousse de polyuréthane recouvert de tissu auquel est attaché un filet contre les insectes, ainsi que des colonnes en mousse de polyuréthane recouvertes de tissu et disposées entre le haut et le bas du panneau. Ces guêtres peuvent être enveloppées autour du bas de la jambe du cheval de façon telle que les colonnes et le panneau crée un espace entre le filet et la jambe du cheval, protégeant ainsi l'animal. Le filet peut être constitué de fils de coton ou de nylon, mais le filet est de préférence constitué d'un matériau élastomère prenant la forme de cordes de polyester recouvertes de vinyle. Néanmoins, cette guêtre présente une structure trop flexible pour assurer un soutien suffisant de la jambe du cheval ainsi qu'une protection suffisante vis-à-vis de chocs externes ou des atteintes.

Idéalement pourtant, il conviendrait de disposer d'une guêtre qui offrirait une protection optimale de la jambe du cheval à la fois vis-à-vis des chocs externes et vis-à-vis des atteintes, tout en lui assurant une bonne ventilation et une bonne aération.

### Buts de l'invention

La présente invention vise à fournir une guêtre de protection pour chevaux et poneys (famille des Equidés) qui ne présente pas les inconvénients des guêtres de l'état de la technique.

Plus précisément, la présente invention vise à fournir une guêtre de protection qui présente une rigidité suffisante pour protéger la jambe du cheval sur essentiellement toute sa surface vis-à-vis des chocs externes et vis-à-vis des atteintes, tout en étant suffisamment flexible pour ne pas entraver la mobilité du cheval et lui assurer une aisance aussi naturelle que possible.

On notera que dans la présente invention on entend par « atteinte » toute blessure occasionnée par le cheval ou le poney lui-même, par frottement frontal (jambe avant/jambe arrière) ou frottement latéral (jambe avant droite/jambe avant gauche ; jambe arrière droite/jambe arrière gauche).

Un autre objet de l'invention est de fournir une guêtre qui assure en conditions d'utilisation une ventilation et une aération suffisante au niveau de la jambe du cheval pour éviter l'accumulation d'eau, que ce soit sous forme de transpiration ou autre, et pour éviter localement tout risque d'échauffement.

La présente invention vise également à fournir une guêtre de protection qui soit facile et relativement peu onéreuse à fabriquer.

Un objet de l'invention est également de fournir une guêtre de protection qui soit facile à utiliser et à entretenir.

### Résumé de l'invention

La présente invention se rapporte à une guêtre de protection aérée pour chevaux et/ou poneys, selon la revendication 1.

De préférence, le thermoplastique est sélectionné parmi le groupe constitué par les élastomères thermoplastiques.

Ces matériaux ont en commun de présenter une structure compacte non cellulaire dont les chaînes moléculaires restent indépendantes les unes aux autres (barrière à l'eau) .

Les thermoplastiques se distinguent des caoutchoucs naturels (néoprène) en ce sens qu'ils sont d'origine purement synthétique, offrant la possibilité d'une ou de plusieurs remises en oeuvre.

De préférence, le thermoplastique est sélectionné parmi l'EPDM, le TPU, , le TPE, le santoprène, et les PVC souples.

La guêtre selon l'invention comprend des zones ouvertes et des zones fermées.

Lesdites zones ouvertes et lesdites zones fermées dessinent un réseau d'alvéoles ou de mailles ouvertes et fermées.

Avantageusement la guêtre comprend un pourcentage de mailles ouvertes compris entre 1% et 100%, de préférence entre 50% et 100%, de préférence entre 50% et 80%.

De préférence, la guêtre comprend en outre des moyens de fixation amovible.

De préférence, la taille de la pièce (i.e. de la guêtre) est telle qu'elle permet de recouvrir la jambe du cheval ou du poney sur essentiellement toute sa circonférence.

De préférence, la taille de la pièce (i.e. de la guêtre) est telle qu'elle permet de recouvrir la jambe du cheval ou du poney sur essentiellement toute sa hauteur.

Le terme « essentiellement » rappelle que la guêtre selon l'invention est conçue pour protéger les régions de la jambe du cheval connues pour être des régions à risque de lésions.

### Brève description des figures

La figure 1a représente une vue du dessus d'une guêtre de protection selon l'invention.

La figure 1b représente une vue de face de cette guêtre (face externe à l'avant).

La figure 2 correspond à un agrandissement de la figure 1b.

La figure 3 correspond à un agrandissement de la figure 1a.

La figure 4a est une vue de face d'une guêtre selon l'invention illustrant comment les moyens de fixation de la guêtre peuvent être disposés.

La figure 4b correspond à un plan de coupe transversale dans la guêtre de la figure 4a illustrant comment la guêtre peut être renforcée sur l'arrière pour soutenir au mieux les tendons du cheval.

Les figures 5a et 5b donnent un exemple d'une coque semi-rigide ou souple à laquelle la guêtre de l'invention peut avantageusement être associée.

La figure 6 représente une autre vue de face de la guêtre de la figure 1a (face externe à l'avant).

La figure 7 présente les zones principales de la jambe du cheval protégées par la guêtre selon l'invention.

Les figures 8a et 8b montrent comment la guêtre selon l'invention peut être mise en place sur la jambe du cheval.

### Description détaillée de l'invention

La guêtre selon la présente invention, qu'elle soit destinée à un cheval ou à un poney, est une guêtre préformée constituée essentiellement d'une seule pièce dans un matériau thermoplastique suffisamment souple pour épouser parfaitement la forme de la jambe de l'animal (cheval ou poney) tout en étant suffisamment résistant et rigide pour assurer une protection optimale de la jambe de l'animal vis-à-vis des chocs et des atteintes.

Ce matériau thermoplastique est compatible avec l'utilisation de la guêtre et notamment les normes vétérinaires.

Un exemple de matériau thermoplastique est le santoprène dont les propriétés sont résumées ci-dessous :
- Dureté (Shore A): 35 (entre 10 et 50)
- Densité : 0,92 (entre 0,80 et 1)
- Elasticité : 450 (entre 200 et 600)
- T° de fusion : 200°C (entre 160° et 250°C)
- Bonne résistance chimique.

Selon que cette guêtre est destinée à un cheval ou à un poney, elle peut présenter quelques différences de réalisation mineures que l'homme de l'art pourra facilement retrouver, mais les caractéristiques techniques essentielles qui définissent la guêtre de l'invention et qui sont exposées ici seront identiques.

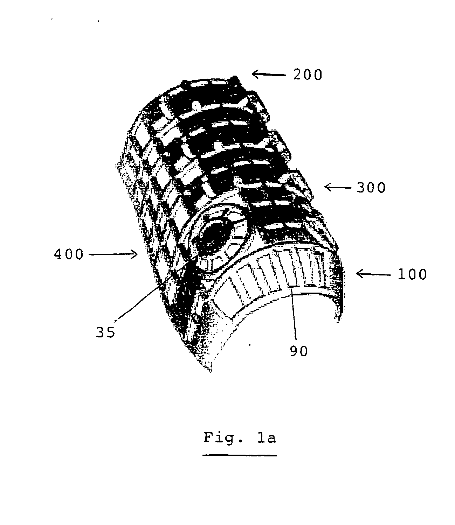

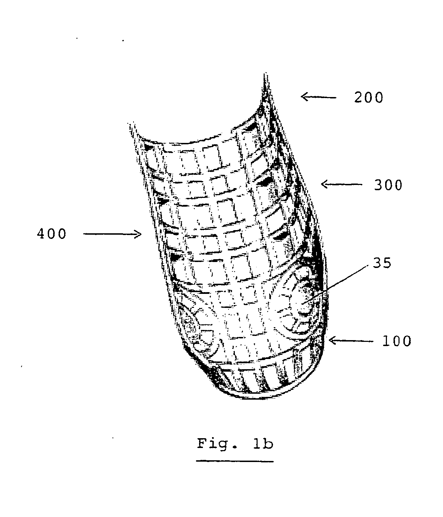

Ainsi qu'illustré aux figures 1a et 1b, la guêtre selon l'invention prise dans son ensemble est délimitée par:
- une partie basale 100 correspondant à la partie de la guêtre destinée à recouvrir le bas de la jambe du cheval;
- une partie distale 200 correspondant à la partie de la guêtre destinée à recouvrir le haut de la jambe du cheval;
- et deux parties latérales 300,400 correspondant aux deux autres côtés de la guêtre.

L'ergonomie générale de la guêtre est telle qu'on peut y distinguer en fait trois zones.

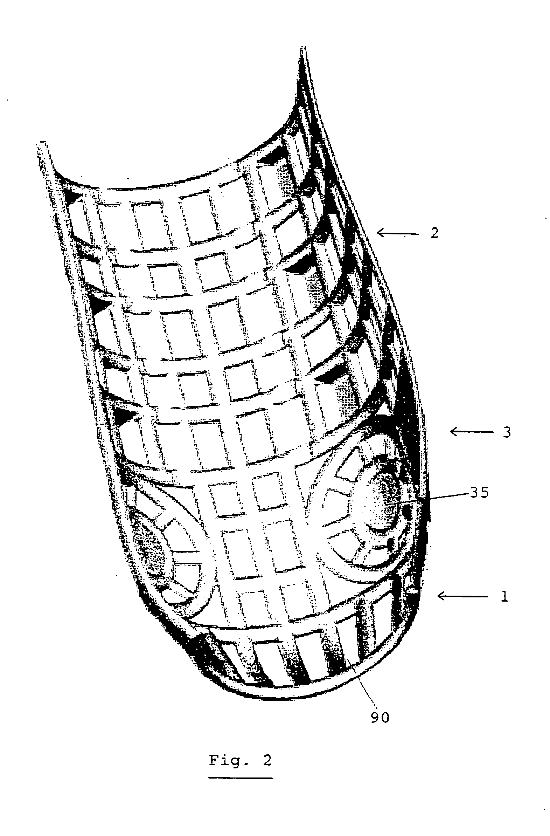

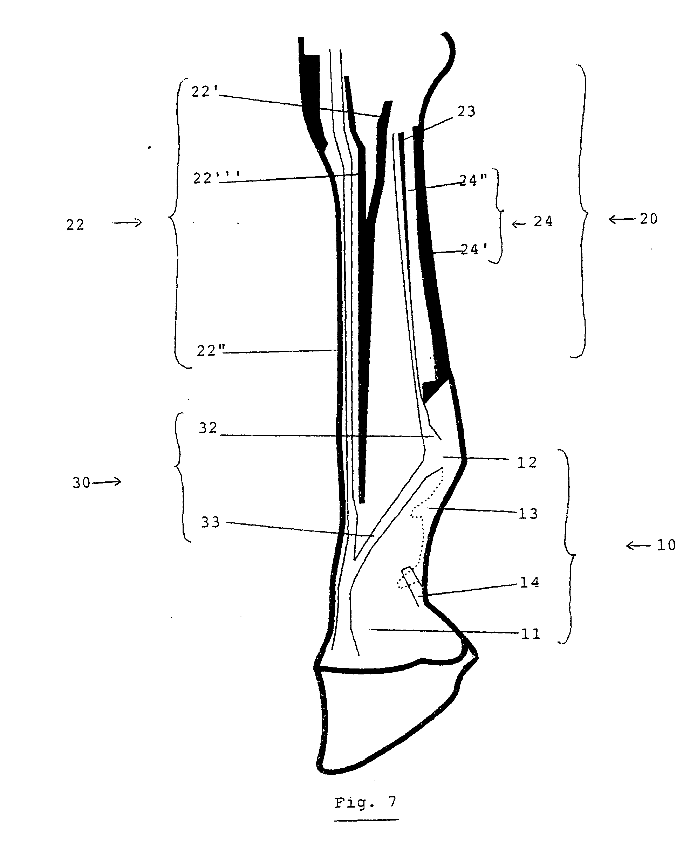

Ainsi qu'illustré aux figures 2 et 7, la première zone 1 correspond à une zone destinée à recouvrir sur toute sa surface une première région 10 de la jambe du cheval comprenant notamment la région du paturon 11 (articulation interphalangienne proximale) et la gaine tendineuse grande sésamoïdienne 12 (fascia métacarpo-phalangien 13 et fascia de renforcement de l'aponévrose palmaire 14).

La deuxième zone 2 correspond à une zone destinée à recouvrir sur toute sa surface une deuxième région 20 de la jambe du cheval comprenant notamment l'os du canon 21 (métacarpien principal), les tendons extenseurs 22 (tendon extenseur latéral 22' et tendon extenseur dorsal 22" des phalanges, tendon extenseur de Philips 22"'), la bride carpienne 23, les tendons fléchisseurs 24 (tendon fléchisseur superficiel 24' et tendon fléchisseur profond 24").

La troisième zone 3, située entre la première zone 1 et la deuxième zone 2 de la guêtre, correspond à une zone destinée à recouvrir sur toute sa surface une troisième région 30 de la jambe du cheval correspondant à la zone d'articulation du boulet du cheval comprenant notamment le métacarpo-phalangien 31, le ligament suspenseur du boulet 32 et la bride 33. A ce niveau, la guêtre présentera un renflement de manière à pouvoir recouvrir le boulet du cheval. Plus précisément, la troisième zone 3 de la guêtre i.e. la région destinée à protéger le boulet comprend avantageusement une structure particulière 35 en forme de coquille ou de bouclier.

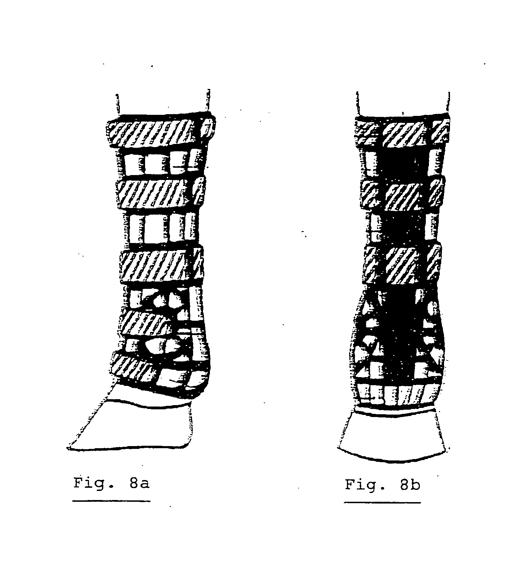

Les figures 8a et 8b montrent le positionnement de la guêtre selon l'invention sur la jambe d'un cheval.

Pour chacune des zones 1,2,3 de la guêtre, on définit une partie avant, une partie arrière, et deux parties latérales (une gauche et une droite) correspondant aux parties de ladite zone destinée à recouvrir respectivement la partie avant, la partie arrière ou les parties latérales de la jambe du cheval.

De préférence, la guêtre étant conçue pour épouser au mieux la jambe du cheval, les dimensions des différentes zones de la guêtre, ainsi que leur orientation relative dans l'espace varie selon que la guêtre est destinée à recouvrir les jambes avant (gauche ou droite) et les jambes arrière (gauche ou droite) que l'homme de l'art pourra facilement prévoir. Cela signifie que de préférence il existera pour la guêtre deux modèles droits (avant et arrière), et deux modèles gauches (avant et arrière), le modèle de guêtre pour la jambe avant droite (respectivement arrière droite) étant le symétrique de la guêtre pour la jambe avant gauche (respectivement arrière gauche).

Selon une forme d'exécution de l'invention, les zones 1 et 2 sont inclinées l'une par rapport à l'autre d'un angle compris entre environ 10° et environ 50°, et de préférence d'un angle d'environ 25°.

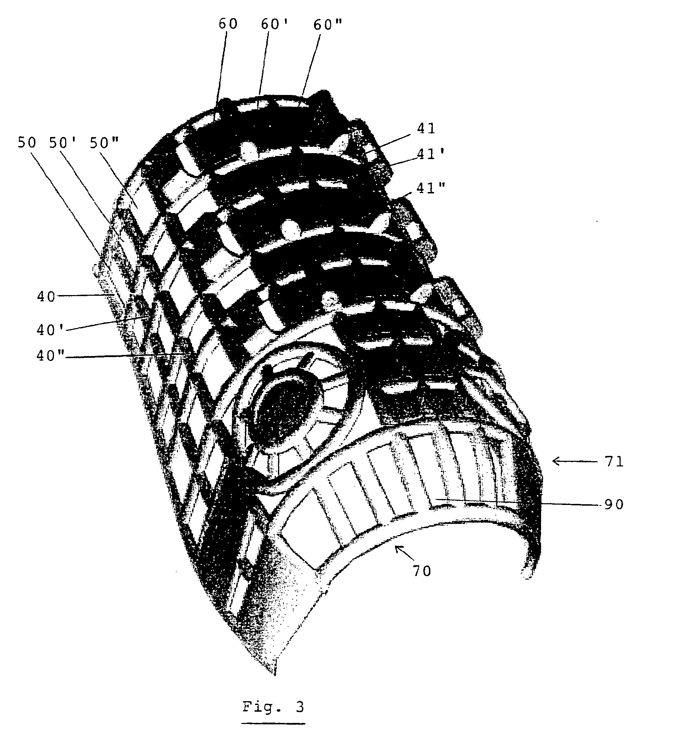

Ainsi qu'illustré à la figure 3, au niveau de ces trois zones, la guêtre comprend une série de profilés longitudinaux 40,40',40"... orientés de façon essentiellement longitudinale par rapport à la longueur de la guêtre i.e. orientés dans le sens de la longueur (hauteur) de la guêtre. La guêtre comprend aussi une série de profilés transversaux 41,41',41"... orientés de façon essentiellement transversale par rapport à la longueur de la guêtre i.e. orientés dans le sens de la largeur de la guêtre. Les profilés 40, 40' , 40",... d'une part et les profilés 41, 41' , 41" , ... d'autre part sont arrangés les uns par rapport aux autres de façon à former un réseau de mailles 50,60,... dessinant des alvéoles à la manière d'une résille. Certaines de ces alvéoles ou mailles sont ouvertes 50,50',50"',... et correspondent à des jours ou trous dans la structure de la guêtre, tandis que d'autres au contraire sont fermées 60, 60' , 60"',....

On définit pour l'ensemble de la guêtre une face interne 70 et une face externe 71, la face interne 70 étant la face de la guêtre destinée à être en contact avec la jambe du cheval, la face externe 71 étant la face de la guêtre qui sera exposée à l'environnement.

Les alvéoles ou mailles ouvertes 50, 50' , 50"', ... correspondent à des trous dans le réseau de la guêtre (un trou traverse donc l'épaisseur de la guêtre de part en part i.e. de la face interne 70 à la face externe 71). Les alvéoles ou mailles fermées 60, 60' , 60"', ... correspondent à des alvéoles ou mailles qui sont obturées par de la matière disposée en surface de la guêtre côté face interne de la guêtre et/ou côté face externe de la guêtre, et/ou disposée dans l'épaisseur de la maille entre la face interne et la face externe de la guêtre (matière prenant la forme par exemple d'une membrane thermoplastique dont l'épaisseur peut varier entre environ 1 mm et 20 mm).

Les alvéoles ou mailles fermées 60,60',60",... sont conçues de manière à pouvoir absorber au maximum les chocs. Les alvéoles ou mailles ouvertes 50, 50' , 50", ... sont elles aussi conçues dans ce sens (elles contribuent à cette fonction d'absorption). En outre, les alvéoles ou mailles ouvertes 50,50',50",... sont conçues de manière à pouvoir assurer une circulation optimale de l'air au niveau de la jambe du cheval en évitant tout échauffement associé à la sudation qui pourrait finir par blesser l'animal en provoquant par exemple des tendinites.

En d'autres termes, dans la guêtre de l'invention, la proportion relative des mailles ou alvéoles ouvertes et fermées, ainsi que leur composition, leurs dimensions, leur densité et leur répartition sur l'ensemble de la guêtre, tout comme celles des profilés qui les dessinent, sont choisies de manière à atteindre ces résultats.

La guêtre présentera ainsi des zones de protection renforcée à des endroits destinés à être en contact avec des zones à haut risque de lésion au niveau de la jambe du cheval.

Ainsi, la guêtre présentera une proportion de mailles fermées particulièrement élevée au niveau de la partie arrière des zones 1,2,3 et notamment au niveau de la zone 3 correspondant au boulet du cheval.

C'est ainsi aussi que, comme déjà souligné plus haut, la troisième zone 3 de la guêtre i.e. la région de la guêtre destinée à protéger le boulet comprend une structure particulière 35 en forme de coquille ou de bouclier (voir Fig.1a).

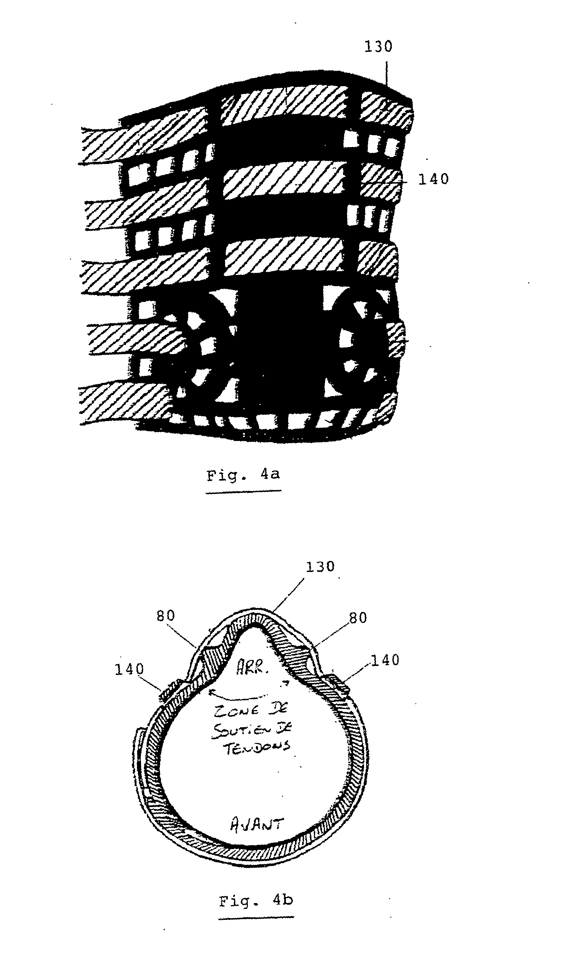

A cet effet aussi, de façon particulièrement avantageuse, les profilés de la guêtre formant les mailles présentent localement une épaisseur accrue, particulièrement au niveau de la partie arrière de la partie distale 200 i.e. au niveau de la partie de la guêtre destinée à recouvrir les tendons arrières de la jambe du cheval ainsi qu'illustré à la figure 4b par la référence 80.

En outre, il est avantageux de prévoir dans la partie basale 100 de la guêtre un « soufflet » 90 correspondant à une zone de haute flexibilité de la guêtre. Ce « soufflet » 90 assurerait une plus grande souplesse de la guêtre à un endroit où la guêtre est particulièrement sollicitée (phases d'appui et de flexion), notamment lorsque le cheval galope. Le soufflet 90 permet en condition d'utilisation de diminuer la tension exercée naturellement au niveau de la partie basale de la guêtre sous l'effet de la pliure de la guêtre pour suivre le mouvement naturel de la jambe du cheval.

Ce « soufflet » 90 peut être par exemple constitué de profilés préformés formant une zone de mailles ouvertes déformables et de dimensions particulièrement grandes par rapport au reste du réseau.

Néanmoins, tout autre moyen alternatif ayant la même fonction peut également constituer le soufflet.

On notera que les alvéoles ou mailles ouvertes peuvent ou non être identiques les unes aux autres. De même, les alvéoles ou mailles fermées peuvent ou non être identiques les unes aux autres.

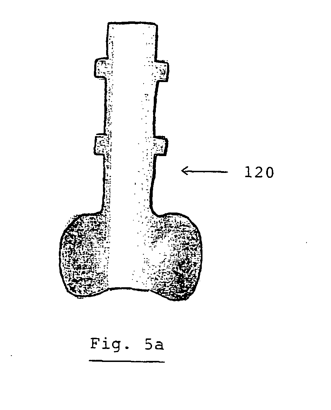

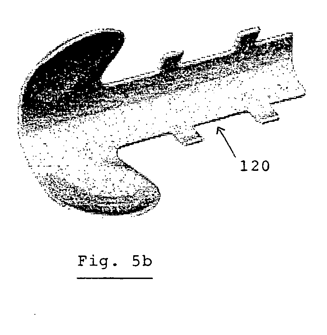

On notera également qu'une coque de protection 120 souple ou semi-rigide préformée peut éventuellement être adjointe à titre d'accessoire à la présente guêtre pour améliorer encore davantage la répartition des chocs. Un exemple d'une telle coque de protection est donné aux figures 5a et 5b. Cette coque souple ou semi-rigide est destinée à recouvrir la partie arrière de la jambe du cheval allant de préférence de la bride carpienne (deuxième zone de la guêtre) à la zone de protection du boulet (troisième zone de la guêtre).

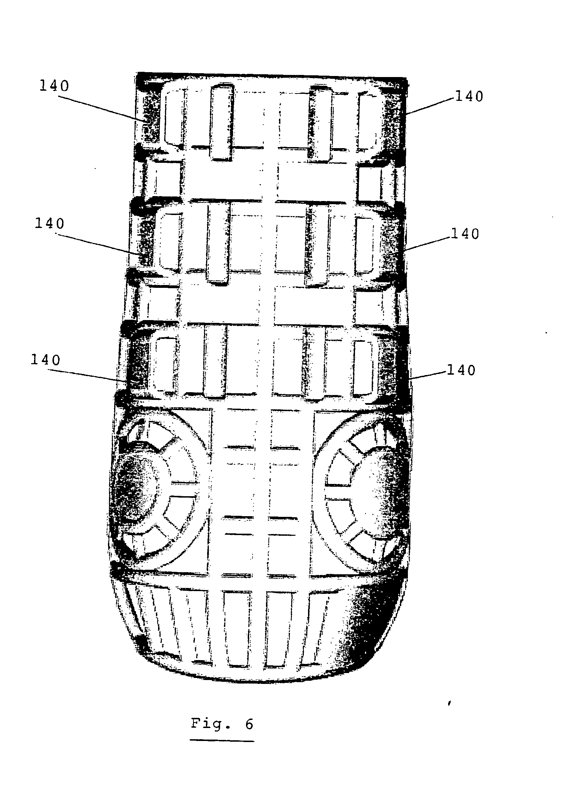

Par ailleurs, la guêtre présente des moyens de fixation pour fixer ladite guêtre à la jambe de l'animal. Ces moyens de fixation peuvent par exemple prendre la forme de bandes Velcro® 130 mais tout autre moyen de fixation équivalent peut également être utilisé. A ce titre, la guêtre peut présenter des passants 140 pour faire passer lesdites bandes Velcro® (voir Fig.4a et Fig.6).

Les moyens de fixation sont choisis de manière à permettre une fermeture de la guêtre sur la partie avant, mais de préférence sur l'une des parties latérales de la guêtre de façon à assurer une bonne protection de la partie avant de la jambe du cheval.

La guêtre est en outre de préférence conçue pour que lors de la fermeture de guêtre il existe un recouvrement partiel de ses parties latérales, de préférence sur toute la hauteur de la guêtre, mais ceci n'est qu'une option.

De préférence également, l'épaisseur des profilés situés à l'extrémité des parties latérales de la guêtre est moindre par rapport à celle du reste du réseau de mailles de manière à obtenir un meilleur recouvrement des parties latérales lors de la fermeture de la guêtre.

Par ailleurs, de préférence, la guêtre selon l'invention est obtenue par un procédé d'injection plastique ou par coulée à partir d'un moule selon les techniques connues de l'état de la technique.

Les avantages de la guêtre selon la présente invention sont nombreux.

Ainsi, la guêtre de l'invention étant préformée par injection, elle est facile à réaliser : un simple moulage suffit alors que pour des guêtres de l'état de la technique en néoprène mentionnées plus haut, il faut prévoir un assemblage par couture des différentes parties de la guêtre.

En outre, comme elle préformée, la guêtre de l'invention est également plus simple à poser et à retirer par rapport aux guêtre de l'état de la technique.

De plus, la guêtre de l'invention étant essentiellement constituée d'un matériau thermoplastique sélectionné pour ne pas absorber l'eau et que sa structure est aérée, son poids est minimal.

Du fait que la guêtre de l'invention n'absorbe pas l'eau, une fois en place sur le cheval elle ne risque pas de se « charger » d'eau et de glisser et donc le cheval ne risque pas de la perdre en se déplaçant, contrairement à d'autres guêtres de l'état de la technique.

En outre, du fait de cette structure alvéolée et aérée, les problèmes d'échauffement associés à la transpiration du cheval sont évités.

Un autre avantage de la guêtre selon l'invention est qu'elle est suffisamment flexible pour éviter les problèmes de mobilité évoqués ci-dessus pour les guêtres à base de néoprène ou composées d'une coque rigide.

De plus, la faible élasticité de l'ensemble permet d'éliminer tout risque d'« effet garot ».

Pour autant, parallèlement la guêtre selon l'invention absorbe suffisamment les chocs pour assurer une protection et un soutien suffisants de la jambe du cheval, notamment au niveau des zones à haut risque de lésion comme les tendons, le boulet et le canon du cheval.

Par ailleurs, comme la guêtre recouvre la jambe du cheval sur toute sa circonférence, cette protection est panoramique ce qui est un réel avantage par rapport aux guêtres de l'état antérieur qui ne protègent que l'arrière de la jambe du cheval. On notera ainsi qu'avec la guêtre selon l'invention, un soutien latéral des tendons est assuré par un système dynamique produit par l'appui des bandes de fermeture sur un bossage externe prévu à cet effet (bossage : voir référence 80 sur la Fig.4b).

De plus, comme la guêtre recouvre également la jambe du cheval quasiment sur toute sa hauteur, la protection qu'elle offre est optimale, ce qui constitue un réel avantage par rapport aux guêtres de l'état antérieur qui ne protègent que le boulet ou du moins une petite zone de la jambe du cheval.

En outre, la guêtre selon l'invention présente, de par sa structure et sa composition, une flexibilité au niveau de la zone qui est en contact avec le boulet du cheval (troisième zone de la guêtre) telle qu'elle favorise la flexion de la guêtre lors du mouvement de la jambe du cheval et notamment lors de la phase d'appui, tout en assurant un soutien suffisant. En d'autres termes, la guêtre présente un juste équilibre entre flexibilité et rigidité.

L'utilisation de la guêtre est avantageusement aussi caractérisée par l'absence de points fixes et de zones de frottement, ce qui offre un réel confort à l'animal.

En outre, le choix des matériaux qui la composent est tel que sa réalisation est relativement peu onéreuse.

Enfin, la guêtre selon l'invention peut être considérée comme universelle dans la mesure où elle est conçue pour s'adapter à différents types de chevaux, et notamment des chevaux de différentes tailles.

### Exemple de réalisation:

Les données techniques présentées ci-dessous correspondent aux caractéristiques d'une guêtre selon l'invention.

### CARACTERISTIQUES GENERALES :

- HAUTEUR: 294 / 304 mm. (entre 200 et 400 mm).
- LARGEUR: 265 / 320 / 265 mm. (entre 150 et 400 mm.)
- BANDE ASYMETRIQUE : 45 / 70 / 70 mm. (entre 20 et 100 mm.)

### CERCLE DE PROTECTION LATERALE DU BOULET (référence 35 sur les figures) :

- DIAMETRE : 85 mm. (entre 50 et 150 mm.)
- RAYON : 42,5 mm. (entre 25 et 75 mm.)
- POSITIONNEMENT SYMETRIQUE : 70 mm. (entre 40 et 100 mm.)

### ALVEOLES :

- LONGUEUR : 36 / 27,5 / 50 mm. (entre 10 et 70 mm.)
- LARGEUR : 22,5 / 30 / 45 mm. (entre 10 et 50 mm.)

### PROFILES « OVALES » (chevauchement possible) :

- LARGEUR : 4 / 6 / 8 mm. (entre 2 et 20 mm.
- LONGUEUR : 10 mm. (entre 2 et 20 mm.)

Les profilés et alvéoles peuvent présenter des formes, des tailles et des épaisseurs variables.

### JAMBES AVANT - JAMBES ARRIERE

La guêtre destinée à protéger les jambes arrières sera plus longue de 20 mm (entre 10 et 30 mm) que celle destinée à protéger les jambes avant, toutes choses restant égales par ailleurs. Cet allongement peut se traduire notamment par l'ajout d'alvéoles au niveau de la zone supérieure de la guêtre.

## Revendications

1. Guêtre de protection aérée pour chevaux et/ou poneys, fabriquée essentiellement d'une seule pièce en thermoplastique, et comprenant des zones ouvertes et des zones fermées, **caractérisée en ce que** lesdites zones ouvertes et zones fermées dessinent un réseau d'alvéoles ou de mailles ouvertes (50, 50' , 50", ...) et fermées (60, 60', 60"), la proportion de mailles ouvertes (50, 50', 50") et de mailles fermées (60, 60', 60") variant sur la surface de la guêtre, la guêtre présentant plus de mailles fermées que de mailles ouvertes dans une ou plusieurs régions destinées à être en contact avec des régions de la jambe du cheval ou du poney à haut risque de lésion par chocs externes ou par atteintes.

2. Guêtre selon la revendication 1, **caractérisée en ce que** la guêtre présente plus de mailles fermées (60, 60' , 60" ' ,...) que de mailles ouvertes ( 50 , 50' , 50' ' ' , ...) dans la région destinée à être en contact avec l'arrière de la jambe du cheval ou du poney.

3. Guêtre selon la revendication 1 ou 2, **caractérisée en ce que** la guêtre présentant une face interne (70) et une face externe (71), les alvéoles ou mailles ouvertes (50,50',50"',...) correspondent à des trous dans le réseau de la guêtre traversant l'épaisseur de la guêtre de part en part, c'est-à-dire allant de la face interne (70) à la face externe (71), tandis que les alvéoles ou mailles fermées (60,60',60'" ,...) correspondent à des alvéoles ou mailles qui sont obturées par de la matière disposée en surface de la guêtre côté face interne (70) de la guêtre.

4. Guêtre selon l'une des revendications précédentes, **caractérisée en ce qu**'en outre l'épaisseur du réseau de mailles est renforcée dans une ou plusieurs desdites régions.

5. Guêtre selon la revendication 4, **caractérisée en ce que** le renforcement de l'épaisseur de la guêtre prend la forme de bossages externes (80) disposés sur la face externe de la guêtre c'est-à-dire sur la face de la guêtre exposée à l'environnement lorsque la guêtre est en place sur le cheval ou le poney.

6. Guêtre selon l'une des revendications précédentes, **caractérisée en ce qu**'elle comprend un pourcentage de mailles ouvertes compris entre 50% et 100%, de préférence entre 50% et 80%.

7. Guêtre selon l'une des revendications précédentes, **caractérisée en ce qu**'elle comprend un protège-boulet (35) prenant la forme générale d'une coquille ou d'un bouclier.

8. Guêtre selon l'une des revendications précédentes, **caractérisée en qu'**elle comprend en outre des moyens de fixation amovible (130).

9. Guêtre selon l'une des revendications précédentes, **caractérisée en ce que** le thermoplastique est sélectionné parmi le groupe constitué par les élastomères thermoplastiques.

10. Guêtre selon la revendication 9, **caractérisée en ce que** le thermoplastique est sélectionné parmi l'EPDM, le TPU, le TPE, le santoprène, et les PVC souples.

11. Guêtre selon l'une des revendications précédentes, **caractérisée en que** la taille de la pièce est telle qu'elle permet de recouvrir la jambe du cheval ou du poney sur toute sa circonférence.

12. Guêtre selon l'une des revendications précédentes, **caractérisée en qu**'elle comprend une première zone et une deuxième zone de forme essentiellement tubulaire reliées entre elles par une troisième zone de forme essentiellement sphérique, la première zone (1) correspondant à une zone destinée à recouvrir sur toute sa surface une première région (10) de la jambe du cheval comprenant notamment la région du paturon (11) et la gaine tendineuse grande sésamoïdienne (12), la deuxième zone (2) correspondant à une zone destinée à recouvrir sur toute sa surface une deuxième région (20) de la jambe du cheval comprenant notamment l'os du canon (21), les tendons extenseurs (22), la bride carpienne (23) et les tendons fléchisseurs (24), la troisième zone (3) correspondant à une zone destinée à recouvrir sur toute sa surface une troisième région (30) de la jambe du cheval correspondant à la zone d'articulation du boulet du cheval comprenant notamment le métacarpo-phalangien (31), le ligament suspenseur du boulet (32) et la bride (33).

13. Guêtre selon l'une des revendications précédentes, **caractérisée en ce que** les dimensions des mailles ouvertes et/ou des mailles fermées varient sur la surface de la guêtre.

14. Guêtre selon l'une des revendications précédentes, **caractérisée en ce qu'**elle présente dans sa partie basale (100) destinée à recouvrir le bas de la jambe du cheval un soufflet (90) correspondant à une zone de haute flexibilité par rapport au reste de la guêtre.

15. Guêtre selon la revendication 14, **caractérisée en ce que** ledit soufflet (90) prend la forme d'une zone de mailles ouvertes déformables et de dimensions particulièrement grandes par rapport au reste du réseau.

16. Kit comprenant la guêtre selon l'une des revendications précédentes.

17. Kit selon la revendication 16, **caractérisé en ce qu**'il comprend une coque (120) souple ou semi-rigide de forme allongée telle qu'elle est apte à s'emboîter sur la zone arrière de la guêtre, ladite coque présentant un renflement au niveau de la région destinée à recouvrir la zone de protection du boulet du cheval ou poney (troisième zone (3) de la guêtre).

18. Utilisation de la guêtre ou du kit selon l'une des revendications précédentes dans le domaine de l'équitation.

## Claims

1. Breathable protective leg wrap for horses and/or ponies, manufactured essentially in only one thermoplastic piece, and comprising open areas and closed areas, **characterized in that** said open areas and closed areas form a network of open (50, 50', 50", ...) and closed (60, 60', 60", ...) cells or meshes, the proportion of open meshes (50, 50', 50") and closed meshes (60, 60', 60") varying over the surface of the leg wrap, the leg wrap having more closed meshes than open meshes in one or several regions intended to be in contact with regions of the horse or pony's leg at high risk for injury due to external shocks or damage.

2. Leg wrap according to claim 1, **characterized in that** the leg wrap has more closed meshes (60, 60', 60", ...) than open meshes (50, 50', 50", ...) in the region designed to be in contact with the back side of the horse or pony's leg.

3. Leg wrap according to claim 1 or 2, **characterized in that** the leg wrap having an inner surface (70) and an outer surface (71), the open cells or meshes (50, 50', 50'', ...) correspond to holes in the network of the leg wrap going completely through the thickness of said leg wrap, i.e. going from the inner surface (70) to the outer surface (71), while the closed cells or meshes (60, 60', 60", ...) correspond to cells or meshes which are covered by material arranged on the surface of the leg wrap on its inner surface (70).

4. Leg wrap according to one of the preceding claims, **characterized in that** the thickness of the mesh network is also reinforced in one or several of said regions.

5. Leg wrap according to claim 4, **characterized in that** the strengthening of the thickness of the leg wrap is done in the form of external bosses (80) arranged on the outer surface of the leg wrap, i.e. on the surface of the leg wrap exposed to the environment when the leg wrap is in place on the horse or pony.

6. Leg wrap according to one of the preceding claims, **characterized in that** it comprises a percentage of open meshes between 50% and 100%, preferably between 50% and 80%.

7. Leg wrap according to one of the preceding claims, **characterized in that** it comprises an ankle boot (35) which is generally shell- or shield-shaped.

8. Leg wrap according to one of the preceding claims, **characterized in that** it furthermore comprises displaceable fixing means (130).

9. Leg wrap according to one of the preceding claims, **characterized in that** the thermoplastic is chosen from the group made up of thermoplastic elastomers.

10. Leg wrap according to claim 9, **characterized in that** the thermoplastic is chosen among EPDM rubber, TPU, TPR, santoprene, and flexible PVCs.

11. Leg wrap according to one of the preceding claims, **characterized in that** the size of the piece is such that it is possible to cover the entire circumference of the horse or pony's leg.

12. Leg wrap according to one of the preceding claims, **characterized in that** it comprises a first area and a second area having essentially tubular shapes connected to each other by a third area having an essentially spherical shape, the first area (1) corresponding to an area intended to cover the entire surface of a first region (10) of the horse's leg comprising in particular the pastern region (11) and the large sesamoid tendon sheath (12), the second area (2) corresponding to a area intended to cover the entire surface of a second region (20) of the horse's leg comprising in particular the cannon bone (21), the extensor tendons (22), the subcarpal check ligament (23) and the flexor tendons (24), the third area (3) corresponding to an area intended to cover the entire surface of a third region (30) of the horse's leg corresponding to the fetlock joint area of the horse comprising in particular the metacarpophalangeal joint (31), the suspensory ligament of the fetlock (32) and the ligament (33).

13. Leg wrap according to one of the preceding claims, **characterized in that** the dimensions of the open meshes and/or closed meshes vary on the surface of the leg wrap.

14. Leg wrap according to one of the preceding claims, **characterized in that** it has, in its basal part (100) intended to cover the bottom of the horse's leg, a gusset (90) corresponding to an area of high flexibility relative to the rest of the leg wrap.

15. Leg wrap according to claim 14, **characterized in that** said gusset (90) assumes the shape of an area of deformable open meshes having particularly large dimensions relative to the rest of the network.

16. Kit comprising the leg wrap according to one of the preceding claims.

17. Kit according to claim 16, **characterized in that** it comprises a flexible or semi-stiff shell (120) having an elongated shape such that it is able to fit into the rear area of the leg wrap, said shell having a bulge at the region intended to cover the area protecting the horse or pony's fetlock (third area (3) of the leg wrap).

18. Use of the leg wrap or kit according to one of the preceding claims in the field of horseback riding.

## Patentansprüche

1. Durchlüftete Schutzgamasche für Pferde und/oder Ponys, die im Wesentlichen einteilig aus Thermoplast hergestellt ist und offene Zonen und geschlossene Zonen aufweist, **dadurch gekennzeichnet, dass** diese offenen Zonen und geschlossenen Zonen ein Netz aus offenen (50, 50', 50'',...) und geschlossenen (60, 60', 60'',...) Zellen oder Maschen darstellen, wobei sich der Anteil offener Maschen (50, 50', 50'' ,...) und geschlossener Maschen (60, 60', 60'',... ) auf der Oberfläche der Gamasche unterscheidet, wobei die Gamasche mehr geschlossene Maschen als offene Maschen in einem oder mehreren Bereichen aufweist, die in Kontakt treten sollen mit den durch äußere Stöße oder Schädigungen hoher Verletzungsgefahr ausgesetzten Bereichen des Pferde- oder Ponybeins.

2. Gamasche nach Anspruch 1, **dadurch gekennzeichnet, dass** die Gamasche mehr geschlossene Maschen 60, 60', 60"' ,...) als offene Maschen (50, 50', 50'", ...) im Bereich, der in Kontakt mit dem hinteren Beinteil des Pferds oder Ponys treten soll, aufweist.

3. Gamasche nach Anspruch 1 oder 2, **dadurch gekennzeichnet, dass** die Gamasche eine Innenfläche (70) und eine Außenfläche (71) aufweist, wobei die Zellen oder offenen Maschen (50, 50' , 50"', ...) Löchern im Netz der Gamasche entsprechen, welche die Dicke der Gamasche zu beiden Seiten durchqueren, das heißt von der Innenfläche (70) zur Außenfläche (71), während die geschlossenen Zellen oder Maschen (60, 60', 60'" ,...) Zellen oder Maschen entsprechen, die versperrt sind durch an der Innenseite der Oberfläche der Gamasche angebrachte Materie, und zwar an der Innenflächenseite (70) der Gamasche.

4. Gamasche nach einem der vorhergehenden Ansprüche, ferner **dadurch gekennzeichnet, dass** die Dicke des Maschennetzes in einer oder mehreren der Zonen verstärkt ist.

5. Gamasche nach Anspruch 4, **dadurch gekennzeichnet, dass** die Verstärkung der Dicke der Gamasche die Form von äußeren Buckeln (80) annimmt, welche auf der Außenfläche der Gamasche angeordnet sind, das heißt die der Umwelt ausgesetzten Seite der Gamasche, wenn die Gamasche am Pferd oder Pony angebracht ist.

6. Gamasche nach einem der vorhergehenden Ansprüche, **dadurch gekennzeichnet, dass** sie einen Prozentanteil offener Maschen von 50% bis 100%, vorzugsweise von 50% bis 80%, umfasst.

7. Gamasche nach einem der vorhergehenden Ansprüche, **dadurch gekennzeichnet, dass** sie einen Fesselgelenkschutz (35) umfasst, der die allgemeine Form einer Schale oder eines Schilds annimmt.

8. Gamasche nach einem der vorhergehenden Ansprüche, **dadurch gekennzeichnet, dass** sie ferner versetzbare Befestigungsmittel (130) umfasst.

9. Gamasche nach einem der vorhergehenden Ansprüche, **dadurch gekennzeichnet, dass** der Thermoplast aus der durch thermoplastische Elastomere gebildeten Gruppe ausgewählt ist.

10. Gamasche nach Anspruch 9, **dadurch gekennzeichnet, dass** der Thermoplast aus EPDM, TPU, TPE, Santopren und den weichen PVC-Kunststoffen ausgewählt ist.

11. Gamasche nach einem der vorhergehenden Ansprüche, **dadurch gekennzeichnet, dass** das Element so groß ist, dass es das Pferde- oder Ponybein in seinem gesamten Umfang überdecken kann.

12. Gamasche nach einem der vorhergehenden Ansprüche, **dadurch gekennzeichnet, dass** sie eine erste Zone und eine im Wesentlichen rohrförmige zweite Zone umfasst, die miteinander durch eine im Wesentlichen kugelförmigen dritten Zone verbunden sind, wobei die erste Zone (1) einer Zone entspricht, die die gesamte Oberfläche eines ersten Bereichs (10) des Pferdebeins überdecken soll, insbesondere den Bereich der Fessel (11) und der Sehnenscheide des großen Sesambeins (12), wobei die zweite Zone (2) einer Zone entspricht, die die gesamte Oberfläche eines zweiten Bereichs (20) des Pferdebeins überdecken soll, insbesondere das Röhrbein (21), die Strecksehnen (22), das Karpalband (23) und die Beugesehnen (24), wobei die dritte Zone (3) einer Zone entspricht, die die ganze Oberfläche eines dritten Bereichs (30) des Pferdebeins auf seiner überdecken soll, welche der Fesselgelenkzone des Pferds entspricht, insbesondere das Metakarpophalangealgelenk (31), das Unterstützungsband des Fesselgelenks (32) und das Band (33) umfassend.

13. Gamasche nach einem der vorhergehenden Ansprüche, **dadurch gekennzeichnet, dass** sich die Größe der offenen Maschen und/oder geschlossenen Maschen auf der Oberfläche der Gamasche unterscheidet.

14. Gamasche nach einem der vorhergehenden Ansprüche, **dadurch gekennzeichnet, dass** sie in ihrem basalen Teil (100), der zur Überdeckung des unteren Pferdebeinteils bestimmt ist, eine Verstärkung (90) aufweist, der einer hochflexiblen Zone in Bezug auf den Rest der Gamasche entspricht.

15. Gamasche nach Anspruch 14, **dadurch gekennzeichnet, dass** der Balg (90) die Form einer Zone verformbarer offener Maschen und mit besonders großen Dimensionen in Bezug auf den Rest des Netzes annimmt.

16. Satz, umfassend die Gamasche nach einem der vorhergehenden Ansprüche.

17. Satz nach Anspruch 16, **dadurch gekennzeichnet, dass** er eine nachgiebige oder halbsteife Schale (120) länglicher Form aufweist, und zwar derart, dass sie sich auf der hinteren Zone der Gamasche einpassen kann, wobei die Schale eine Ausbauchung am Bereich, der die Schutzzone des Fesselgelenks des Pferds oder Ponys (dritte Zone (3) der Gamasche) überdecken soll, aufweist.

18. Verwendung der Gamasche oder des Satzes nach einem der vorhergehenden Ansprüche auf dem Gebiet der Reitkunst.
